# EUROPÄISCHE PATENTSCHRIFT

(11) **EP 0 731 118 B1**
(45) Veröffentlichungstag und Bekanntmachung des Hinweises auf die Patenterteilung: **17.10.2001**
(21) Anmeldenummer: 96102878.4
(22) Anmeldetag: 27.02.1996
(51) Int. Cl.: C08F 283/06, C08F 290/14, C08G 18/63

(54) **Niedrigviskose Polymerpolyole, ein Verfahren zu ihrer Herstellung sowie ihre Verwendung zur Herstellung von Polyurethanschaumstoffen**
Low viscosity polymer polyols, a process for their preparation and their use in the preparation of polyurethane foam
Polymères-polyols à faible visosité, leur préparation ainsi que leur utilisation dans la préparation de mousse de polyuréthane

(30) Priorität: 10.03.1995 DE 19508578; 08.09.1995 DE 19533164
(43) Veröffentlichungstag der Anmeldung: 11.09.1996
(73) Patentinhaber: BAYER AG, 51368 Leverkusen (DE)
(72) Erfinder: Sanders, Josef, Dr., 51373 Leverkusen (DE); Kratz, Mark, Dr., 47800 Krefeld (DE); Dietrich, Manfred, Dr., 51373 Leverkusen (DE); Heinemann, Torsten, Dr., 51065 Köln (DE); Woynar, Helmut Dr, 41540 Dormagen (DE); Jacobs, Gundof Dr, 51503 Rösrath (DE); Scholz, Uwe Dr, 51065-Köln (DE)

(56) Entgegenhaltungen:
- EP-A- 0 163 188
- US-A- 4 230 823
- US-A- 4 568 705
- US-A- 4 661 531

## Beschreibung

Unter Polymerpolyolen sind im Rahmen der Erfindung Produkte zu verstehen, die durch Polymerisation ethylenisch ungesättigter Verbindungen in Polyetherpolyolen ("Basispolyolen") erhalten werden können. Diese können z.B. zur Herstellung von Polyurethan-Weichschaumstoffen verwendet werden. Hauptsächlich eingesetzte ethylenisch ungesättigte Verbindungen sind die Monomeren Styrol und Acrylnitril, die z.B. in Polyetherpolyolen als Basispolyol radikalisch polymerisiert werden.

Die Herstellung solcher Polymerpolyole ist beispielsweise in den US-Patent-schriften 3 383 351 und 3 304 273 oder in der DE-A 1 152 536 und DE-A 1 152 537 beschrieben.

Die Polymerpolyole sind im Idealfall verhältnismäßig niedrigviskose, feinteilige, nichtsedimentierende Dispersionen des Polymerisats (vorzugsweise eines Acrylnitril/Styrol-Pfropf-Copolymeren) in dem im wesentlichen unveränderten Polyetherpolyol. Kennzeichnende Merkmale für Qualität und Verarbeitbarkeit der Polymerpolyole sind Viskosität, Lagerstabilität (Sedimentationsbeständigkeit) und Feinteiligkeit. Diese Eigenschaften werden vor allem durch Art und Mengenverhältnisse der Ausgangsstoffe beeinflußt. Insbesondere der Feststoffgehalt (Monomeranteil im Ansatz) und das Monomerverhältnis (z.B. Styrol/Acrylnitrilverhältnis) haben großen Einfluß auf die Produktqualität.

Die wichtigsten Ziele bei der Herstellung von Polymerpolyolen sind das Erreichen hoher Feststoffgehalte (mindestens 40%) bei möglichst hohem Styrolanteil und möglichst niedriger Viskosität bei gleichzeitig ausgezeichneter Produktstabilität.

Um die Produktstabilität, d.h. die Unterbindung der Bildung unerwünschter, aus der kontinuierlichen Phase, dem Basispolyol, ausfallender, agglomerierter Polymerpartikel zu erreichen, müssen die Polymerteilchen während der Polymerpolyolherstellung stabilisiert werden. Diese Stabilisierung wird einmal durch den Einbau eines Teils der Moleküle des Basispolyethers in das in situ gebildete Polymere bewirkt. Hierbei wird die Effektivität der Stabilisierung einmal durch ein möglichst hohes Molgewicht des Basispolyethers und durch einen möglichst hohen Acrylnitrilanteil im Monomergemisch begünstigt. Während ein hoher Acrylnitrilgehalt die Eigenfarbe der Polymerpolyole und die Verfärbungstendenz damit hergestellter Weichschäume erhöht und damit unerwünscht ist, wird die Viskosität der Polymerpolyole durch den Einsatz von Basispolyolen mit höherem Molekulargewicht erhöht.

Eine Möglichkeit, weitgehend unabhängig vom Molekulargewicht des Basispolyols und vom Acrylnitrilanteil im Monomergemisch niedrigviskose Polymerpolyole mit höheren Füllstoffgehalten zu erhalten ist die Mitverwendung von Kettenüberträgern. In Frage kommen hier zum Beispiel die in der Polymerisationstechnik üblichen Mercaptane, Halogenalkane oder Alkohole.

Auch die Mitverwendung von Enolethern als Kettenüberträger wird in der EP-A 008 444 beschrieben, wodurch die Herstellung von Polymerpolyolen mit relativ niedriger Viskosität bei relativ hohem Füllstoffgehalt und Styrolanteil ermöglicht werden soll.

Eine weitere Möglichkeit zur Stabilisierung von Polymerpolyolen ist die Mitverwendung von mit der Polyolphase kompatiblen Verbindungen, die ethylenisch ungesättigte, polymerisationsfähige Gruppen enthalten. Diese sogenannten Makromeren copolymerisieren mit den Vinylmonomeren, so daß die entstehenden Polymerteilchen durch Polyetherseitenketten sterisch stabilisiert werden und somit gegen Agglomeration und Sedimentation geschützt sind.

Die Herstellung von Polymerpolyolen unter Mitverwendung von Makromeren ist beschrieben z. B. in US-PS 3 652 639, US-PS 3 823 201, US-PS 4 460 715, US-PS 4 390 645, US-PS 5 093 412, US-PS 4 342 840. Die ethylenisch ungesättigten Doppelbindungen werden in Polyetherpolyole beispielsweise eingeführt durch Umsetzung mit cyclischen, ungesättigten Carbonsäureanhydriden wie Maleinsäureanhydrid und nachfolgende Umsetzung mit Ethylen- oder Propylenoxid; durch Veresterung mit Acryl- bzw. Methacrylsäure(derivaten); durch Umsetzung mit Allylglycidylether; durch Umsetzung mit einem ungesättigten Isocyanat wie zum Beispiel Isocyanatoalkyl-acrylat und -methacrylat, 1-(1-Isocyanato-1-methylethyl)-3-(1-methylethenyl)-benzol oder NCO-funktionellen Addukten aus einem Polyisocyanat und Hydroxyethyl- bzw. Hydroxypropyl-acrylat.

Auch die Kombination von Makromeren mit Kettenüberträgern wie Mercaptanen oder Alkoholen ist bereits in der DE-A 2 500 274, der EP-A 0 190 769 sowie in der EP-A 0 091 036 beschrieben worden. Mit Mercaptanen hergestellte Produkte haben den Nachteil, daß sie zumeist einen mehr oder weniger unangenehmen Geruch aufweisen. Oft zeigen solche Produkte auch nicht die erwünschte Viskosität.

Auch wenn die erwähnten Verfahren zu Polymerpolyolen führen, die grundsätzlich als Polyolkomponente für die Herstellung von Polyurethanweichschäumen verwendet werden können, so sind doch weitere Verbesserungen erwünscht: So sind die der Literatur zu entnehmenden Viskositäten höhergefüllter Polymerpolyole insbesondere bei höheren Styrolanteilen im Monomergemisch immer noch recht hoch und es werden oft kleinere agglomerierte Polymerteilchen im Ablauf beobachtet, d.h. die Feinteiligkeit der Produkte ist nicht ausreichend.

Es wurde nun überraschend gefunden, daß agglomeratfreie Polymerpolyole mit hohen Füllstoffgehalten und niedrigen Viskositäten hergestellt werden können, indem man die Polymerpolyole in Gegenwart eines Makromeren der oben beschriebenen Art und eines Enolethers der allgemeinen Formel

A=CH-O-R

herstellt, in welcher
- A: einen zweiwertigen Rest der Formel 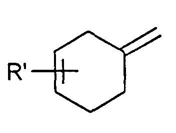
- R: C₁₋₁₈-Alkyl-, C₅₋₁₀-Cycloalkyl- oder gegebenenfalls einen am Kern substituierten Benzylrest,
und
- R': Wasserstoff oder einen C₁₋₈-Alkylrest
bedeutet.

Durch die Mitverwendung einer Kombination von Makromeren mit den speziellen Kettenüberträgern vom Enolethertyp der beschriebenen Art werden, wie in den Vergleichsbeispielen gezeigt wird, stabile feinteilige Polymerpolyole zugänglich, die bei gegebenem Füllstoffgehalt und Styrolanteil nochmals niedrigere Viskositäten haben oder bei gegebener Viskosität höhere Styrolanteile bzw. Feststoffgehalte aufweisen als entsprechende, unter Mitverwendung anderer üblicher Kettenüberträger/ Makromer-Kombinationen hergestellte Produkte.

Gegenstand der Erfindung ist ein Verfahren zur Herstellung stabiler agglomeratfreier, niedrigviskoser Pfropfcopolymerdispersionen durch radikalische Polymerisation ethylenisch ungesättigter Monomerer in einem Basispolyol, dadurch gekennzeichnet, daß die Polymerisation in Gegenwart eines Polyols mit ethylenisch ungesättigten Endgruppen (Makromer), eines Enolethers der allgemeinen Formel

A=CH-O-R,

in welcher
- A und R: die obengenannte Bedeutung haben,
und gegebenenfalls in Gegenwart eines organischen Lösungsmittel durchgeführt wird.

Üblicherweise wird das erfindungsgemäße Verfahren so durchgeführt, daß ethylenisch ungsättigte Monomere wie z.B. Styrol und Acrylnitril durch radikalische Polymerisation in einem zwei bis sechs Hydroxylgruppen aufweisenden Polyalkylenoxid mit einer OH-Zahl über 20 als Basispolyol in Gegenwart eines Polyols mit ethylenisch ungesättigten Endgruppen (Makromer) und eines Enolethers der oben angegbebenen Formel umgesetzt werden.

Erfindungsgemäß ist bevorzugt, daß
- die ethylenisch ungesättigten Monomeren in einer Menge von 25-65 Gew.-% bezogen auf die Gesamtmenge an Monomeren und Polyol verwendet werden,
- als ethylenisch ungesättigte Monomere Mischungen aus Styrol und . Acrylnitril verwendet werden,
- als ethylenisch ungesättigte Monomere Mischungen aus Styrol und Acrylnitril im Gew.-Verhältnis von 20:80 bis 100:0, besonders bevorzugt 50:50 bis 80:20 verwendet werden,
- als Basispolyol ein mindestens zwei bis sechs Hydroxylgruppen aufweisendes Polyalkylenoxid mit einer OH-Zahl von 20 bis 100, besonders bevorzugt 30 bis 70 eingesetzt wird,
- das Basispolyol ein Molekulargewicht von 1.800 bis 4.500, besonders bevorzugt 2.000 bis 4.000 g/mol aufweist,
- das Polyol mit ethylenisch ungesättigten Endgruppen (Makromer) ein Molekulargewicht von 3.000 bis 15.000, besonders bevorzugt 4.500 bis 12.000 g/mol und eine Funktionalität von 2-6 aufweist,
- das Polyol mit ethylenisch ungesättigten Endgruppen (Makromer) im statistischen Mittel 0,1-1,5, besonders bevorzugt 0,3-1, Mol Doppelbindungen pro Mol Polyol aufweist,
- das Polyol mit ethylenisch ungesättigten Endgruppen (Makromer) in einer Menge von 2 bis 20, besonders bevorzugt 3-10 Gew.-%, bezogen auf eingesetztes Basispolyol eingesetzt wird,
- als Enolether (Cyclohex-3-enylidenmethoxymethyl)-benzol eingesetzt wird,
- der Enolether in einer Menge von 0,1 bis 5 Gew. % bezogen auf das eingesetzte Monomergemisch eingesetzt wird, und
- als gegebenenfalls mitzuverwendendes organisches Lösungsmittel Toluol oder Ethylbenzol eingesetzt wird.

Die Erfindung betrifft auch stabile agglomeratfreie, niedrigviskose Pfropfcopolymer-Dispersionen, erhältlich nach dem erfindungsgemäßen Verfahren und die Verwendung der erfindungsgemäß erhältlichen Pfropfcopolymer-Dispersionen als Polyolkomponente bei der Herstellung von Polyurethanschaumstoffen nach dem Isocyanat-Polyadditionsverfahren.

Die als "Basispolyole" verwendeten mindestens zwei Hydroxylgruppen aufweisenden Polyole sind vorzugsweise Polyetherpolyole, z.B. die an sich bekannten Additionsprodukte von cyclischen Ethern wie Ethylenoxid, Propylenoxid, Styroloxid, Butylenoxid an Starterverbindungen wie z.B. Polyhydroxyverbindungen wie Alkylenglykole, Glycerin, Trimethylolpropan, Pentaerythrit, Sorbit, Amine wie Ethylendiamin oder Toluylendiamine. Die als "Basispolyol" verwendeten Polyetherpolyole haben vorzugsweise Funktionalitäten von 2 bis 6 und eine OH-Zahl von 20 bis 100. Die Polyetherketten sind bevorzugt aus Propylenoxid- und Ethylenoxideinheiten aufgebaut. Als "Basispolyole" kommen aber auch grundsätzlich Polyesterpolyole mit Funktionalitäten von vorzugsweise 2 bis 6 und einer OH-Zahl 20 bis 100 in Frage.

Die Polymerpolyole werden durch radikalische Polymerisation ethylenisch ungesättigter Monomerer oder Mischungen ethylenisch ungesättigter Monomere in den beschriebenen Polyetherpolyolen erhalten. Beispiele für derartige Monomere sind Butadien, Styrol, α-Methylstyrol, Methylstyrol, Ethylstyrol, Acrylnitril, Methacrylnitril, Methylmethacrylat, Acrylsäureester. Bevorzugt werden Styrol und Acrylnitril verwendet. Die Menge an ethylenisch ungesättigten Monomeren beträgt 25 bis 65 Gew.-%, bezogen auf die Gesamtmenge an fertigem Produkt. Bei der Verwendung von Styrol und Acrylnitril ist das Verhältnis dieser beiden Monomeren vorzugsweise 20:80 bis 100:0, insbesondere 50:50 bis 80:20 Gewichtsteile.

Die Initiierung der radikalischen Polymerisation erfolgt mit üblichen radikalbildenden Initiatoren. Beispiele für derartige Initiatoren sind organische Peroxide wie Benzoylperoxid, tert.-Butyloctoat, Dodecanoylperoxid; Azoverbindungen wie Azoisobutyronitril oder 2,2'-Azobis(2-methylbutyronitril).

Die als Ausgangsmaterial für das Polyol mit ethylenisch ungesättigten Gruppen verwendeten Polyole sind ebenfalls vorzugsweise Polyetherpolyole wie die an sich bekannten Additionsprodukte von cyclischen Ethern wie Ethylenoxid, Propylenoxid, Styroloxid, Butylenoxid an Starterverbindungen wie z.B. Polyhydroxyverbindungen wie Alkylenglykole, Glycerin, Trimethylolpropan, Pentaerythrit, Sorbit, Amine wie Ethylendiamin oder Toluylendiamine. Die als Ausgangsmaterial für das Polyol mit ethylenisch ungesättigten Gruppen dienenden Polyetherpolyole haben Funktionalitäten von 2 bis 6 und eine Molmasse von 3000 bis 15000 g/mol. Die Polyetherketten sind bevorzugt aus Propylenoxid- und Ethylenoxideinheiten aufgebaut.

Die ethylenisch ungesättigten Gruppen können nach den literaturbekannten Verfahren eingeführt werden. Bevorzugt ist die Umsetzung der Polyole mit Maleinsäureanhydrid und anschließende Alkoxylierung mit Ethylen- oder Propylen-oxid, die Umsetzung mit Acrylsäure bzw. deren Methyl- oder Ethylester und die Umsetzung mit einem ungesättigten Isocyanat wie z. B. 1-(1-Isocyanato-1-metylethyl)-3-(1-methylethenyl)-benzol oder einem NCO-funktionellen Addukt aus einem Polyisocyanat und Hydroxyethyl- bzw. Hydroxypropyl-acrylat. Zur Herstellung des letzteren Typs können als Polyisocyanate beispielsweise eingesetzt werden Hexamethylendiisocyanat, Isophorondiisocyanat, Diphenylmethandiisocyanat und besonders bevorzugt Toluylendiisocyanat.

Die Polyole mit ethylenisch ungesättigten Endgruppen enthalten im statistischen Mittel in der Regel 0,1 bis 1,5, vorzugsweise 0, 3-1 Mol Doppelbindungen pro Mol Polyol.

Die erfindungsgemäß mitzuverwendenden Enolether sind literaturbekannt; ihre Herstellung ist beispielsweise in in den deutschen Auslegeschriften 1 668 091 und 1 768 396 beschrieben. Geeignete Vertreter dieser Verbindungsklasse werden beispielsweise in der EP 008 444 aufgeführt. Besonders bevorzugt ist (Cyclohex-3-enylidenmethoxymethyl)-benzol, das unter der Bezeichnung Vulkazon AFD, Bayer AG, im Handel ist.

In der Regel wird der Enolether in einer Menge von 0,1 bis 5 Gew.-% bezogen auf das eingesetzte Monomergemisch eingesetzt.

Als gegebenenfalls einzusetzende Lösungsmittel können Kohlenwasserstoffe wie Toluol, Ethylbenzol, Isopropylbenzol, Xylole, Ketone wie Aceton oder Methylethylketon, Alkohole wie Methanol, Ethanol, Isopropanol oder Butanol einsetzt werden. Bevorzugt sind Touol und Ethylbenzol.

Die Durchführung des erfindungsgemäßen Verfahrens kann diskontinuierlich oder kontinuierlich erfolgen. Man kann z.B. eine Mischung , die die ethylenisch ungesättigten Monomeren, den Enolether, den Initiator und gegebenenfalls Lösungsmittel und einen Teil des einzusetzenden Polyols enthält, in einen Rührwerksbehälter eindosieren, der den vorerhitzten Polyether und das Makromer enthält. Es besteht aber auch die Möglichkeit, einen Teil des Makromers zusammen mit den ethylenisch ungesättigten Monomeren, dem Enolether, gegebenenfalls dem Lösungsmittel und einem Teil des Polyethers zuzudosieren. Als weitere Möglichkeit kann man auch den Enolether zusammen mit dem Polyether bzw. mit der Hauptmenge des Polyethers und dem Makromer im Reaktor vorlegen und die übrigen Komponenten zudosieren.

Außerdem kann eine Mischung aller Reaktionsteilnehmer kontinuierlich in einen Reaktor eindosiert und das Produkt in gleichem Maße durch einen Überlauf entnommen werden.

Die Temperatur, bei der die Polymerisation durchgeführt wird, beträgt in der Regel 80 bis 140°C, vorzugsweise 90 bis 130°C.

Nach Beendigung der Polymerisationsreaktion wird das Produkt in üblicher Weise durch Vakuumdestillation von leichtflüchtigen Anteilen wie Restmonomeren, Lösungsmittel usw. befreit.

Die nach dem erfindungsgemäßen Verfahren hergestellten Polymerpolyole sind hervorragend zur Herstellung von Polyurethankunststoffen nach dem Isocyanat-Polyadditionsverfahren geeignet. Sie sind frei von Polymeragglomeraten jeglicher Art, stabil und niedrigviskos. Dabei ist besonders überraschend, daß die erfindungsgemäße Kombination von Makromeren mit speziellen Enolethern bei Verwendung niedrigmolekularer Basispolyole mit Molekulargewichten zwischen 1.800 und 4.500 Polymerpolyole mit vorteilhaft niedrigen Viskosität ergibt. Da auf den Einsatz von Mercaptan-Kettenverlängerem beim erfindungsgemäßen Verfahren verzichtet werden kann, sind die erhaltenen Produkte in vorteilhafter Weise weitgehend geruchsfrei.

Die Herstellung von Polyurethankunststoffen, vorzugsweise von weichen, flexiblen Polyurethanschäumen erfolgt durch Umsetzung von
a) organischen Polyisocyanaten mit
b) den erfindungsgemäßen Polymerpolyolen, gegebenenfalls in Gegenwart von
c) weiteren höhermolekularen und/oder niedermolekularen, gegenüber Isocyanaten reaktive Wasserstoffatome enthaltende Verbindungen,
d) Katalysatoren,
e) Wasser und/oder niedrigsiedenden Kohlenwasserstoffen als Treibmittel und
f) Hilfsmitteln und/oder Zusatzstoffen.

Als Ausgangskomponenten werden verwendet:
a) aliphatische, cycloaliphatische, araliphatische, aromatische und heterocyclische Polyisocyanate, wie sie z.B. von W. Siefken in Justus Liebigs Annalen der Chemie, 362, Seiten 75 bis 136 beschrieben werden, beispielsweise solche der allgemeinen Formel

   Q(NCO)ₙ,

   in der
   - n: 2 bis 5, vorzugsweise 2 und 3, und
   - Q: einen aliphatischen Kohlenwasserstoffrest mit 2 bis 18, vorzugsweise 6 bis 10 Kohlenstoffatomen, einen cycloaliphatischen Kohlenstoffrest mit 4 bis 15, vorzugsweise 5 bis 10 Kohlenstoffatomen, einen aromatischen Kohlenwasserstoffrest mit 6 bis 15, vorzugsweise 6 bis 13 Kohlenstoffatomen bedeuten, z.B. solche Polyisocyanate, wie sie in der DE-OS 2 832 253, Seiten 10 bis 11, beschrieben werden.
   Besonders bevorzugt werden in der Regel die technisch leicht zugänglichen Polyisocyanate, z.B. das 2,4- und 2,6-Toluylendiisocyanat, sowie beliebige Gemische dieser Isomeren ("TDI"), Diphenylmethandiisocyanat ("MDI") und Polyphenylpolymethylenpolyisocyanate, wie sie durch Anilin-Formaldehyd-Kondensation und anschließende Phosgenierung hergestellt werden und Carbodiimidgruppen, Urethangruppen, Allophanatgruppen, Isocyanuratgruppen, Harnstoffgruppen oder Biuretgruppen aufweisende Polyisocyanate ("modifizierte Polyisocyanate"), insbesondere solche modifizierten Polyisocyanate, die sich vom 2,4- und/oder 2,6-Toluyoendiisocyanat bzw. 4,4'-und/oder 2,4'-Diphenylmethandiisocyanat ableiten;
b) die erfindungsgemäßen Polymerpolyole,
c) gegebenenfalls als Ausgangskomponenten Verbindungen mit mindestens 2 gegenüber Isocyanaten reaktionsfähigen Wasserstoffatomen mit einem Molekulargewicht von 40 bis 10 000 g/mol, vorzugsweise Polyetherpolyole, d.h. an sich bekannte Additionsprodukte von cyclischen Ethern wie Ethylenoxid, Propylenoxid, Styroloxid, Butylenoxid an Starterverbindungen wie z.B. Polyhydroxyverbindungen wie Alkylenglykole, Glycerin, Trimethylolpropan, Pentaerythrit, Sorbit, Amine wie Ethylendiamin oder Toluylendiamine sowie die Starterverbindungen selbst;
d) erfindungsgemäß werden gegebenenfalls die in der Polyurethanchemie an sich üblichen Katalysatoren mitverwendet;
e) gegebenenfalls werden als Treibmittel Wasser und/oder niedrigsiedende Kohlenwasserstoffe mitverwendet, z.B. niedrigsiedende Alkane wie Pentan, Cycloalkane wie Cyclopentan, ferner Alkene sowie unter Druck in die Reaktionsmischung eingebracht Gase wie Kohlendioxid;
f) gegebenenfalls werden Hilfs- und Zusatzmittel mitverwendet wie
   f₁) oberflächenaktive Zusatzstoffe wie Emulgatoren und Schaumstabilisatoren,
   f₂) Reaktionsverzögerer, Zellregler der an sich bekannten Art wie Parrafine, Fettalkohole oder Dimethylpolysiloxane sowie Pigmente oder Farbstoffe und Flammschutzmittel der an sich bekannten Art, ferner Stabilisatoren gegen Alterungs- und Witterungseinflüsse, Weichmacher und fungistatisch und bakteriostatisch wirkende Substanzen.
   Beispiele von gegebenenfalls erfindungsgemäß mitzuverwendenden oberflächenaktiven Zusatzstoffen und Schaumstabilisatoren sowie Reaktionsverzögerern, Stabilisatoren, flammhemmenden Substanzen, Weichmachern, Farbstoffen sowie fungistatisch und bakteriostatisch wirksamen Substanzen sowie Einzelheiten über Verwendungs- und Wirkungsweise dieser Zusatzmittel sind im Kunststoff-Handbuch, Band VII, herausgegeben von G. Oertel, Carl Hanser Verlag, München, 1993, z.B. auf den Seiten 104 bis 127 beschrieben.

Die Herstellung der weichen Polyurethanschaumstoffe erfolgt in an sich bekannter Weise, wie z.B. im Kunststoff-Handbuch, Band VII, herausgegeben von G. Oertel, Carl Hanser Verlag, München, 1993, z.B. auf den Seiten 139 bis 263 beschrieben.

### Beispiele:

### Ausgangsprodukte:

- Polyol A:: Polyether auf Basis Glycerin/Propylenglykol (Gew.-Verh. 90:10), hergestellt durch Addition von PO (30%), PO/EO (40/10 %) und PO (20%), OHZ = 56 mgKOH/g.
- Polyol B:: Polyether der Molmasse 6.000 auf Basis Trimethylolpropan, hergestellt durch Addition von PO (82,3%) und EO (17,7%).
- Polyol C:: Polyether der Molmasse 4.800 auf Basis Trimethylolpropan, hergestellt durch Addition von PO (82,5%) und EO ( 17,5%).
- Polyol D:: Polyether der Molmasse 3.660 auf Basis Glycerin, hergestellt durch Addition von PO(30 %), PO/EO (40/10 %) und PO(20 %), OHZ = 46.
- Polyol E:: Polyether der Molmasse 5.430 auf Basis Trimethylolpropan, hergestellt durch Addition von PO(17 %), PO/EO (51/17 %) und PO(15 %), OHZ = 31.
- Polymerpolyol A:: VP.PU 80WB40, Fa. Bayer AG, Feststoffgehalt ca. 40 %, Styrolanteil ca. 60%.
- Makromer A:: Umsetzungsprodukt von einem Mol Polyol C mit 0,75 Mol Maleinsäureanhydrid und anschließende Addition von 0,9 Mol Ethylenoxid. Das Produkt hat einen Doppelbindungsgehalt von 49 meq/kg.
- Makromer B:: Umsetzungsprodukt von einem Mol Polyol C mit 1,2 Mol Acrylsäure, hergestellt durch azeotrope Veresterung in Gegenwart von 0,1 Gew.-% p-Toluolsulfonsäure (bez. auf Polyol C) und Toluol als Lösungsmittel. Das Produkt hat einen Doppelbindungsgehalt von 100 meq/kg.
- Makromer C:: Umsetzungsprodukt von einem Mol Polyol B mit 1,2 Mol Acrylsäure, hergestellt durch azeotrope Veresterung in Gegenwart von 0,1 Gew.-% p-Toluolsulfonsäure (bez. auf Polyol B) und Toluol als Lösungsmittel. Das Produkt hat einen Doppelbindungsgehalt von 139 meq/kg.
- Makromer D:: Umsetzungprodukt von einem Mol Polyol C mit dem Reaktionsprodukt von 0,75 Mol Hydroypropylacrylat und 0,825 Mol TDI. Das Produkt hat einen Doppelbindungsgehalt von 56 meq/kg.
- Makromer E:: Umsetzungprodukt von einem Mol Polyol B mit dem Reaktionsprodukt von 0,75 Mol Hydroypropylacrylat und 0,9 Mol TDI. Das Produkt hat einen Doppelbindungsgehalt von 71 meq/kg.
- Makromer F:: Umsetzungsprodukt von einem Mol Polyol C mit einem Mol 1-(1-Isocyanato-1-methylethyl)-3-(1-methylethenyl)-benzol. Das Produkt hat einen Doppelbindungsgehalt von 228 meq/kg.
- Makromer G:: Umsetzungsprodukt von einem Mol Polyol B mit einem Mol 1-(1-Isocyanato-1-methylethyl)-3-(1-methylethenyl)-benzol. Das Produkt hat einen Doppelbindungsgehalt von 211 meq/kg.
- Enolether A:: (Cyclohex-3-enylidenmethoxymethyl)-benzol (cis,trans-Isomerengemisch), unter der Bezeichnung Vulkazon AFD Handelsprodukt der Bayer AG. 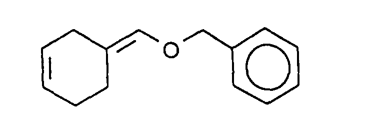
- Enolether B:: (Cyclohex-3-enyliden)-cyclohexylether (cis,trans-Isomerengemisch), hergestellt durch Umsetzung von Cyclohex-3-en-carbaldehyd mit Cyclohexanol in Gegenwart von p-Toluolsulfonsäure und Chinolin analog EP 008 444. Kp: 82°C/ 0,15 mbar. 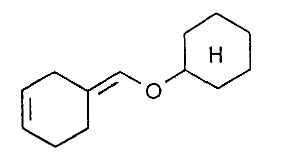
- Enolether C:: (Norborn-3-enylidenmethoxymethyl)-benzol(cis,trans-Isomerengemisch), hergestellt durch Umsetzung von 5-Norbornen-2-Aldehyd mit Benzylalkohol in Gegenwart von p-Toluolsulfonsäure und Chinolin analog EP 008 444. Kp: 106°C/ 0,1 mbar. (nicht erfindungsgemäß) 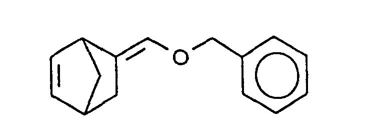
- Enolether D:: Butyliden-Benzylether (cis,trans-Isomerengemisch), hergestellt durch Umsetzung von 2-Butyraldehyd mit Benzylalkohol in Gegenwart von p-Toluolsulfonsäure und Chinolin analog EP 008 444. Kp: 73°C/ 0,2 mbar. (nicht erfindungsgemäß) 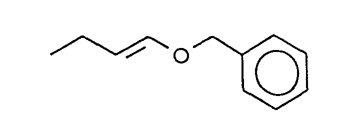
- Enolether E:: (Cyclohex-3-enyliden)-Butylether (cis,trans-Isomerengemisch), hergestellt durch Umsetzung von Cyclohex-3-en-carbaldehyd mit n-Butanol in Gegenwart von p-Toluolsulfonsäure und Chinolin analog EP 008 444. Kp: 68 °C/ 0,1 mbar.

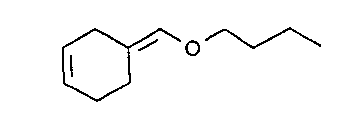

### Allgemeine Vorschrift zur Herstellung der Polymerpolyolen:

Zu einer Mischung von 225,2 g Polyol und 25 g Makromer wird unter Rühren bei 125°C eine Mischung bestehend aus 375,3 g Polyol, 250,2 g Styrol, 166,8 g Acrylnitril 8,34 g Enolether (oder anderer Kettenüberträger), 5,21 g 2,2'-Azobis(2-methylbutyronitril) und 144 g Toluol gleichmäßig über 2 Stunden zudosiert.

Anschließend wird 30 Minuten bei 125°C nachgerührt. Nach zügiger Zugabe einer Lösung von 0,92 g 2,2'-Azobis(2-methylbutyronitril) in 25,4 g Toluol rührt man noch eine weitere Stunde bei 125°C nach und destilliert dann Toluol und andere flüchtige Bestandteile bei 125°C erst über eine Stunde im Wasserstrahlvakuum (15 mbar), dann über 2 Stunden im Ölpumpenvakuum (< 2 mbar) ab. Nach Abkühlen auf ca.100°C wird das Produkt über ein Sieb mit einer Maschenweite von 100 µm abgelassen.

### Durchführung des Ablauftests:

Ca. 3 ml Polymerpolyol werden in ein 10 ml Rollrandgläschen gegeben, dessen Innenwände durch Umschütteln anschließend vollständig mit Polymerpolyol benetzt werden. Nach 24 stündigem Stehen bei Raumtemperatur wird der an den Glaswänden verbliebene Rückstand nach Anzahl der Teilchen von etwa 5-30 µm Durchmesser beurteilt:

| | |
|---|---|
| gut | bis ca. 10 Teilchen pro cm² |
| mittel | von ca. 10 bis 30 Teilchen pro cm² |
| schlecht | ab ca. 30 Teilchen pro cm² |

### Beispiele 1-8:

Entsprechend der allgemeinen Herstellvorschrift wurden Poymerpolyole mit dem Polyol A als Basispolyol und dem Makromer A als Makromer hergestellt, wobei unterschiedliche Kettenüberträger eingesetzt wurden. Zum Vergleich wurde die Reaktion auch ohne Kettenüberträger durchgeführt.

Die Ergebnisse sind in der nachfolgenden Tabelle zusammengestellt:

| Beispiel | Kettenüberträger | Viskosität (mPas/25°C) | | Ablauf |
|---|---|---|---|---|
| 1* | --- | 3990 | | gut |
| 2* | Isopropanol | 3760 | [1] | schlecht |
| 3* | 2-Butanol | 3710 | | gut |
| 4* | Methylethylketon | 3720 | | gut |
| 5* | Tetrachlormethan | 3740 | | gut |
| 6* | 1-Dodecylmercaptan | 4990 | | mittel |
| 7 | Enolether A | 3240 | | gut |
| 8 | Enolether B | 3190 | | gut |

| | | | | |
|---|---|---|---|---|
| *Vergleichsbeispiel [1] unfiltrierbares Produkt | | | | |

In diesen Serie ergeben die erfindungsgemäßen Enolether A und B die niedrigsten Viskositäten.

### Beispiele 9-19:

Entsprechend der allgemeinen Herstellvorschrift wurden Poymerpolyole mit dem Polyol A als Basispolyol und dem Makromer B als Makromer hergestellt, wobei unterschiedliche Kettenüberträger eingesetzt wurden. Zum Vergleich wurde die Reaktion auch ohne Kettenüberträger durchgeführt.

Die Ergebnisse sind in der nachfolgenden Tabelle zusammengestellt:

| Beispiel | Kettenüberträger | Viskosität (mPas/25°C) | | Ablauf |
|---|---|---|---|---|
| 9* | --- | --- | [2] | --- |
| 10* | Isopropanol | 7450 | [1] | schlecht |
| 11* | 2-Butanol | 7970 | [1] | schlecht |
| 12* | Methylethylketon | --- | [3] | --- |
| 13* | Tetrachlormethan | 4000 | | gut |
| 14* | 1-Dodecylmercaptan | 29850 | | schlecht |
| 15 | Enolether A | 3550 | | gut |
| 16 | Enolether B | 3450 | | gut |
| 17* | Enolether C | --- | [3] | --- |
| 18* | Enolether D | 4480 | | mittel |
| 19 | Enolether E | 3480 | | gut |

| | | | | |
|---|---|---|---|---|
| *Vergleichsbeispeil [1] unfiltrierbares Produkt [2] Reaktion mußte abgebrochen werden, da der Ansatz wegen zu hoher Viskosität nicht mehr rührbar war [3] klumpig, die Reaktion mußte abgebrochen werden | | | | |

In dieser Serie ergeben die erfindungsgemäßen Enolether A, B und E feinteilige, niedrigviskose Produkte, während die nicht erfindungsgemäßen Enolether C und D und die anderen Kettenüberträger instabile bzw. grobteiligere und höherviskosere Dispersionen liefern.

### Beispiele 20-27:

Entsprechend der allgemeinen Herstellvorschrift wurden Poymerpolyole mit dem Polyol A als Basispolyol und dem Makromer C als Makromer hergestellt, wobei unterschiedliche Kettenüberträger eingesetzt wurden. Zum Vergleich wurde die Reaktion auch ohne Kettenüberträger durchgeführt.

Die Ergebnisse sind in der nachfolgenden Tabelle zusammengestellt:

| Beispiel | Kettenüberträger | Viskosität (mPas/25°C) | | Ablauf |
|---|---|---|---|---|
| 20* | --- | 4950 | [1] | schlecht |
| 21* | Isopropanol | 4330 | [1] | schlecht |
| 22* | 2-Butanol | 4710 | [1] | schlecht |
| 23* | Methylethylketon | 4630 | | schlecht |
| 24* | Tetrachlormethan | 4100 | | mittel |
| 25* | 1-Dodecylmercaptan | --- | [2] | --- |
| 26 | Enolether A | 3550 | | gut |
| 27 | Enolether B | 3300 | | gut |

| | | | | |
|---|---|---|---|---|
| *Vergleichsbeispeil [1] unfiltrierbares Produkt [2] Reaktion mußte abgebrochen werden, da der Ansatz wegen zu hoher Viskosität nicht mehr rührbar war | | | | |

Auch in Kombination mit dem Makromer C ergeben die erfindungsgemäßen Enolether A und B feinteilige, niedrigviskose Produkte, während die anderen Kettenüberträger instabile bzw. grobteiligere und höherviskosere Dispersionen liefern.

### Beispiele 28-35:

Entsprechend der allgemeinen Herstellvorschrift wurden Poymerpolyole mit dem Polyol A als Basispolyol und dem Makromer D als Makromer hergestellt, wobei unterschiedliche Kettenüberträger eingesetzt wurden. Zum Vergleich wurde die Reaktion auch ohne Kettenüberträger durchgeführt.

Die Ergebnisse sind in der nachfolgenden Tabelle zusammengestellt:

| Beispiel | Kettenüberträger | Viskosität (mPas/25°C) | | Ablauf |
|---|---|---|---|---|
| 28* | --- | 19000 | [1] | schlecht |
| 29* | Isopropanol | --- | [3] | --- |
| 30* | 2-Butanol | --- | [2] | --- |
| 31* | Methylethylketon | --- | [3] | --- |
| 32* | Tetrachlormethan | 5840 | | mittel |
| 33* | 1-Dodecylmercaptan | 13200 | | schlecht |
| 34 | Enolether A | 3140 | | gut |
| 35 | Enolether B | 3340 | | gut |

| | | | | |
|---|---|---|---|---|
| *Vergleichsbeispeil [1] unfiltrierbares Produkt [2] Reaktion mußte abgebrochen werden, da der Ansatz wegen zu hoher Viskosität nicht mehr rührbar war [3] klumpig, die Reaktion mußte abgebrochen werden | | | | |

In Kombination mit dem Makromer D wird der Vorteil der erfindungsgemäßen Enolether A und B noch deutlicher. Nur mit ihnen werden stabile, niedrigviskose Produkte erhalten.

### Beispiele 36-43:

Entsprechend der allgemeinen Herstellvorschrift wurden Poymerpolyole mit dem Polyol A als Basispolyol und dem Makromer E als Makromer hergestellt, wobei unterschiedliche Kettenüberträger eingesetzt wurden. Zum Vergleich wurde die Reaktion auch ohne Kettenüberträger durchgeführt.

Die Ergebnisse sind in der nachfolgenden Tabelle zusammengestellt:

| Beispiel | Kettenüberträger | Viskosität (mPas/25°C) | | Ablauf |
|---|---|---|---|---|
| 36* | --- | 7110 | [1] | schlecht |
| 37* | Isopropanol | 4800 | [1] | schlecht |
| 38* | 2-Butanol | 5180 | | schlecht |
| 39* | Methylethylketon | 5100 | | schlecht |
| 40* | Tetrachlormethan | 4850 | | mittel |
| 41* | 1-Dodecylmercaptan | 5250 | | mittel |
| 42 | Enolether A | 3550 | | gut |
| 43 | Enolether B | 3260 | | gut |

| | | | | |
|---|---|---|---|---|
| *Vergleichsbeispeil [1] unfiltrierbares Produkt | | | | |

Nur die erfindungsgemäßen Enolether A und B ergeben feinteilige, niedrigviskose Produkte.

### Beispiele 44-51:

Entsprechend der allgemeinen Herstellvorschrift wurden Poymerpolyole mit dem Polyol A als Basispolyol und dem Makromer F als Makromer hergestellt, wobei unterschiedliche Kettenüberträger eingesetzt wurden. Zum Vergleich wurde die Reaktion auch ohne Kettenüberträger durchgeführt.

Die Ergebnisse sind in der nachfolgenden Tabelle zusammengestellt:

| Beispiel | Kettenüberträger | Viskosität (mPas/25°C) | | Ablauf |
|---|---|---|---|---|
| 44* | --- | --- | [2] | --- |
| 45* | Isopropanol | --- | [2] | --- |
| 46* | 2-Butanol | --- | [2] | --- |
| 47* | Methylethylketon | --- | [2] | --- |
| 48* | Tetrachlormethan | 6410 | | schlecht |
| 49* | 1-Dodecylmercaptan | 5870 | | schlecht |
| 50 | Enolether A | 4410 | | gut |
| 51 | Enolether B | 4020 | | gut |

| | | | | |
|---|---|---|---|---|
| *Vergleichsbeispeil [2] Reaktion mußte abgebrochen werden, da der Ansatz wegen zu hoher Viskosität nicht mehr rührbar war | | | | |

In Kombination mit dem Makromer F wird der Vorteil der erfindungsgemäßen Enolether A und B besonders deutlich. Nur sie ergeben feinteilige, niedrigviskose Dispersionen. Mit den nicht erfindungsgemäßen Kettenüberträgern werden entweder instabile oder grobteilige, hochviskose Dispersionen erhalten.

### Beispiele 52-59:

Entsprechend der allgemeinen Herstellvorschrift wurden Poymerpolyole mit dem Polyol A als Basispolyol und dem Makromer G als Makromer hergestellt, wobei unterschiedliche Kettenüberträger eingesetzt wurden. Zum Vergleich wurde die Reaktion auch ohne Kettenüberträger durchgeführt.

Die Ergebnisse sind in der nachfolgenden Tabelle zusammengestellt:

| Beispiel | Kettenüberträger | Viskosität (mPas/25° C) | | Ablauf |
|---|---|---|---|---|
| 52* | --- | 9500 | | schlecht |
| 53* | Isopropanol | 6800 | [1] | schlecht |
| 54* | 2-Butanol | 6330 | | schlecht |
| 55* | Methylethylketon | 5950 | | schlecht |
| 56* | Tetrachlormethan | 4940 | | mittel |
| 57* | 1-Dodecylmercaptan | 3800 | | mittel |
| 58 | Enolether A | 3480 | | gut |
| 59 | Enolether B | 3780 | | gut |

| | | | | |
|---|---|---|---|---|
| *Vergleichsbeispeil [1] unfiltrierbares Produkt | | | | |

Nur die erfindungsgemäßen Enolether A und B ergeben feinteilige, niedrigviskose Produkte.

### Beispiele 60-91:

Verwendung der erfindungsgemäßen Polymerpolyole gemäß den Beispielen 8, 15, 27, 35, 42, 50, und 59 zur Herstellung von Weichschaumstoffen:

Für einen Laborschaum werden alle Komponenten - außer dem Katalysator 3 und dem Polyisocyanat - intensiv miteinander vermischt. Danach wird Katalysator 3 zugegeben, kurz vermischt und dann das Polyisocyanat unter Rühren hinzugegeben. Anschließend wird die Reaktionsmischung in eine offene Form gegossen, worin sie zum Weichschaum aufschäumt.

Die Ergebnissen der Schäumversuche sind in den nachfolgenden Tabellen zusammengefaßt: (Mengen jeweils in Gew.-Teilen)
- Katalysator 1:: Desmorapid® DMEA, Fa. Rhein Chemie, Rheinau
- Katalysator 2:: RC-PUR Aktivator 108, Fa. Rhein Chemie, Rheinau
- Katalysator 3:: Desmorapid® SO, Fa. Rhein Chemie, Rheinau
- Stabilisator:: Stabilisator OS 22, Fa. Bayer AG
- Isocyanat:: Toluylendiisocyanat (Desmodur® T 80, Bayer AG)

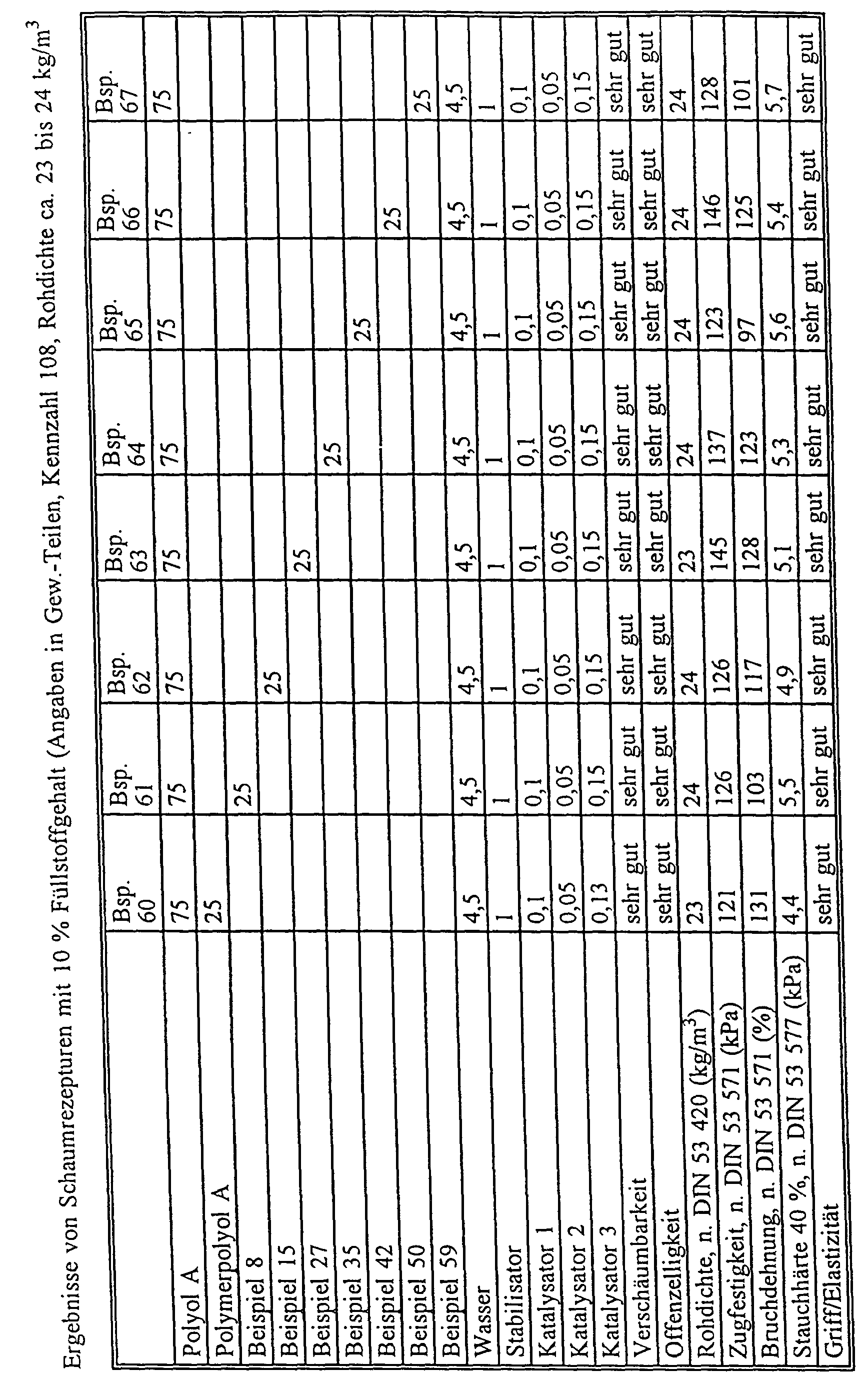

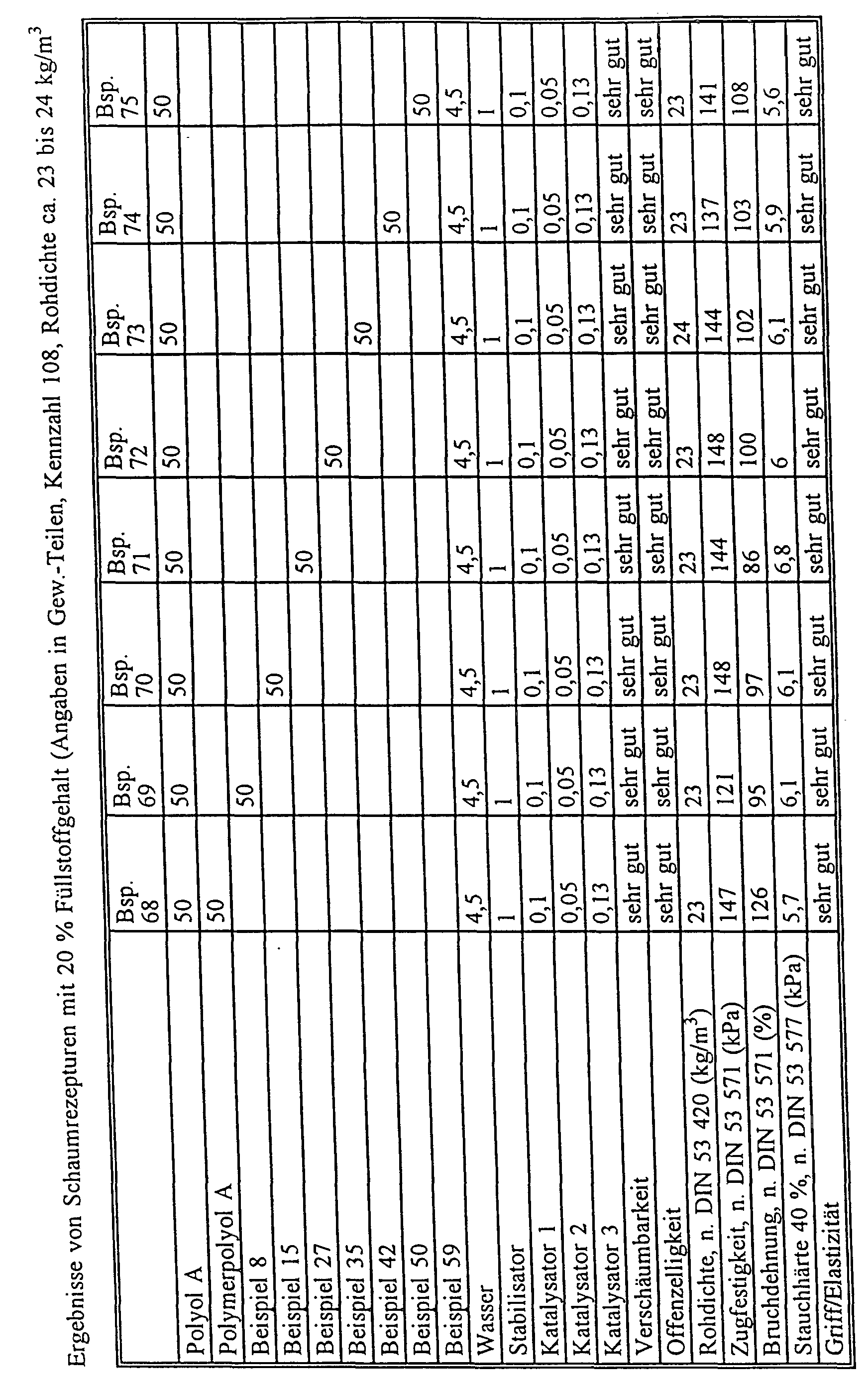

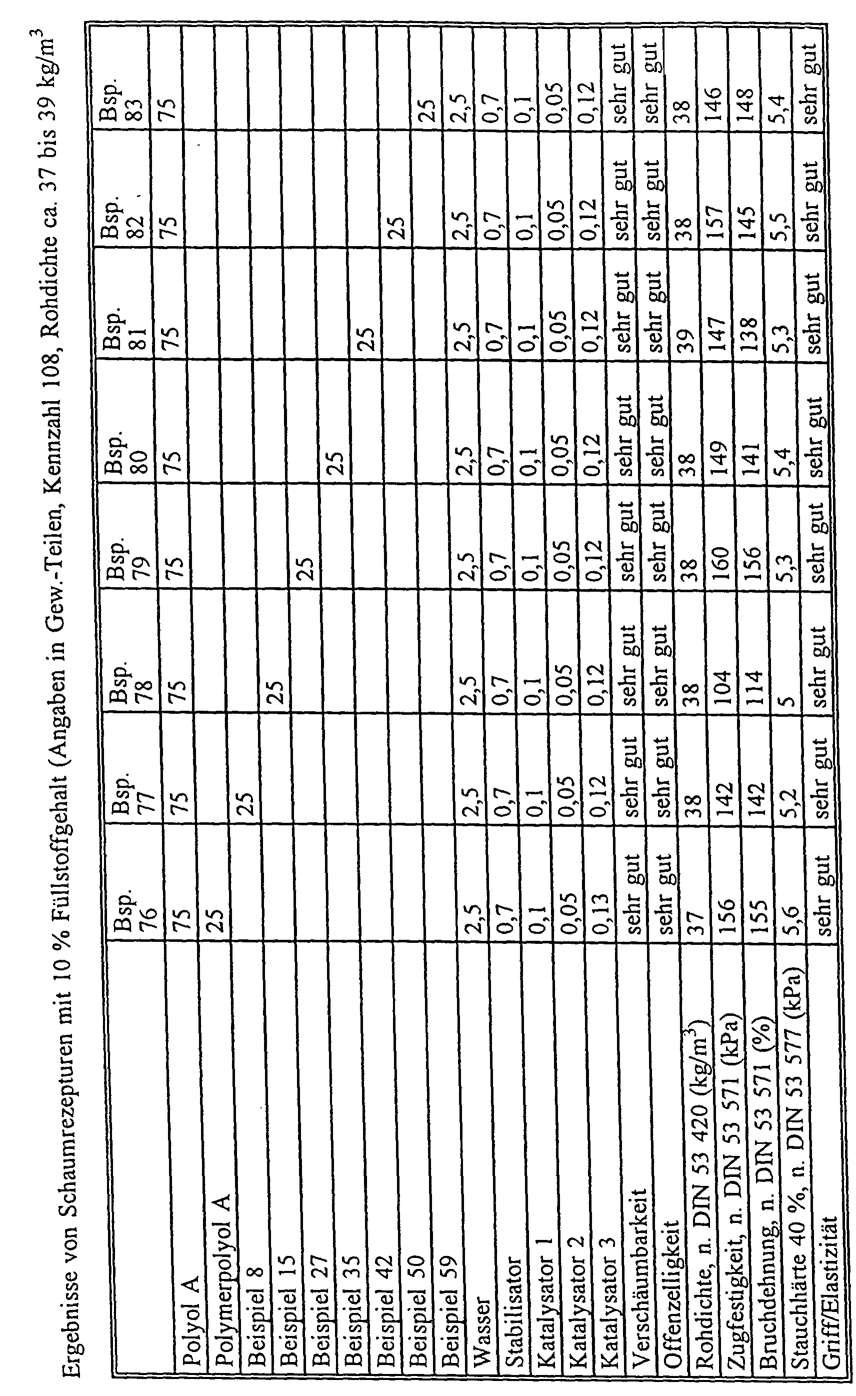

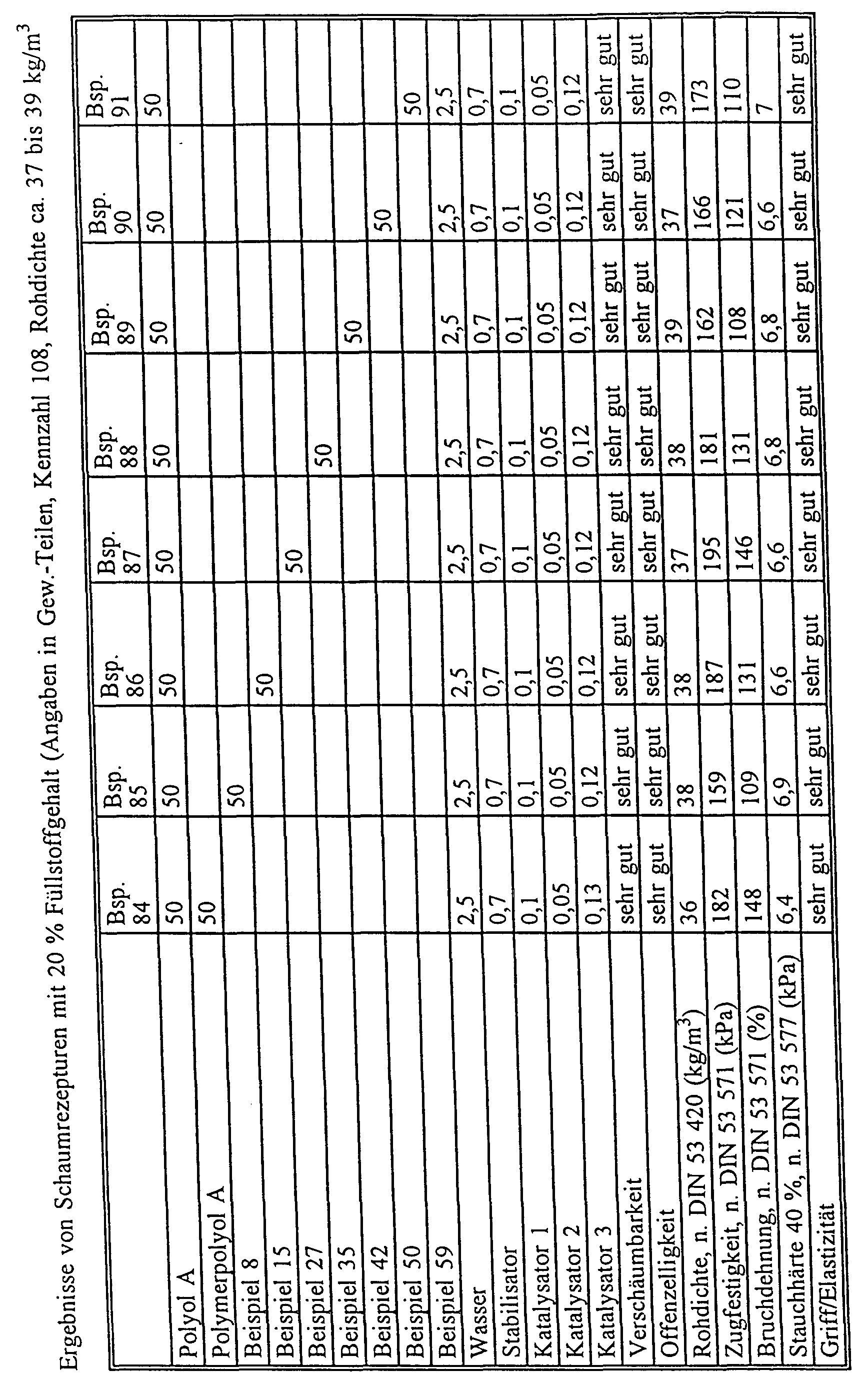

Die Verschäumungsbeispiele 60 - 91 zeigen, das die erfindungsgemäßen feinteiligen, niedrigviskosen Polymerpolyol-Dispersionen Schäume mit vergleichbaren Eigenschaften ergeben, wie aktuelle Handelsprodukte mit höherer Viskosität. Schaumrezepturen mit den erfindungsgemäßen Produkten können aufgrund ihrer niedrigeren Viskosität bei gleichem Füllstoffgehalt leichter verarbeitet werden. Außerdem können mit ihnen unter Berücksichtigung einer gleichen maximalen Verarbeitungsviskosität höhere Feststoffgehalte eingestellt werden, die Schäume mit entsprechend höheren Härten liefern.

### Vergleichsbeispiele 1 bis 6:

Zu Vergleichszwecken wurden Polymerpolyole in Gegenwart von Enolethern ohne Makromerzusatz hergestellt.

Zu 250,2 g Polyol wurde unter Rühren in Stickstoffatmosphäre bei 125°C eine Mischung bestehend aus 375,3 g Polyol, 250 g Styrol, 166,8 g Acrylnitril, 8,34 Enolether A, 5,2 g 2,2'-Azobis(2-methyl-butyronitril) und 144 g Toluol gleichmäßig über 2 Stunden zudosiert. Anschließend wurde 30 Minuten bei 125°C nachgerührt. Nach zügiger Zugabe einer Lösung von 0,9 g 2,2'-Azobis(2-methylbutylronitril) in 25,4 g Toluol rührte man noch eine weitere Stunde bei 125°C nach und destillerte dann Toluol und andere flüchtige Bestandteile bei 125°C erst eine Stunde im Wasserstrahlvakuum (15 mbar) dann über 2 Stunden im Ölpumpenvakuum (< 2 mbar) ab. Nach Abkühlen auf ca. 100°C wurde das Produkt über ein Sieb mit einer Maschenweite von 100 um abgelassen.

Die Ergebnisse der Vergleichsversuche sind in nachfolgender Tabelle zusammengefaßt.

| Vergleichsbeispiel | Polyol | Enolehter | Viskosität (mPas/25°C) | | Ablauf |
|---|---|---|---|---|---|
| 1 | Polyol A | - | klumpig | [1] | - |
| 2 | Polyol A | Vulkazon AFD | klumpig | [1] | - |
| 3 | Polyol D | - | | | |
| 4 | Polyol D | Vulkazon AFD | hochviskos | [2] | - |
| 5 | Polyol E | - | 21.780 | | schlecht |
| 6 | Polyol E | Vulkazon AFD | 7.180 | | schlecht |
| [1] Dispersion nicht stabil, Reaktion mußte abgebrochen werden [2] Reaktionsmischung wurde so viskos, daß die Reaktion abgebrochen werden mußte | | | | | |

Die Vergleichsversuche zeigen, daß ohne den Zusatz von Makromeren nur unerwünscht hochviskose oder klumpige Polymerpolyole erhalten werden.

## Patentansprüche

1. Verfahren zur Herstellung stabiler, agglomeratfreier, niedrigviskoser Pfropfcopolymer-Dispersionen durch radikalische Polymerisation ethylenisch ungesättigter Monomerer in einem 2 bis 6 Hydroxylgruppen aufweisenden Polyalkylenoxid mit einer OH-Zahl über 20 als Basispolyol, **dadurch gekennzeichnet, daß** die Polymerisation in Gegenwart eines Polyols mit ethylenisch ungesättigten Endgruppen, eines Enolethers der nachstehenden allgemeinen Formel
A=CH-O-R,
in welcher
A einen zweiwertigen Rest der Formel 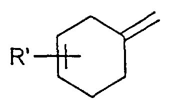
R C₁₋₁₈-Alkyl-, C₅₋₁₀-Cycloalkyl- oder gegebenenfalls einen am Kern substituierten Benzylrest,
und
R' Wasserstoff oder einen C₁₋₈-Alkylrest
bedeutet
und gegebenenfalls in Gegenwart eines organischen Lösungsmittels durchgeführt wird, wobei
die Menge an ethylenisch ungesättigten Monomeren 25 - 65 Gew.-%, bezogen auf die Gesamtmenge an fertigem Produkt beträgt.

2. Verfahren nach Anspruch 1, **dadurch gekennzeichnet, daß** als ethylenische ungesättigte Monomere Styrol und Acrylnitril im Gewichtsverhältnis von 20:80 bis 100:0 verwendet werden.

3. Verfahren nach Anspruch 1, **dadurch gekennzeichnet, daß** als ethylenische ungesättigte Monomere Styrol und Acrylnitril im Gewichtsverhältnis von 50:50 bis 80:20 verwendet werden.

4. Verfahren nach einem der Ansprüche 1 bis 3, **dadurch gekennzeichnet, daß** als Basispolyol ein zwei bis sechs Hydroxylgruppen aufweisendes Polyalkylenoxid mit einer OH-Zahl von 20 bis 100, vorzugsweise von 30 bis 70, eingesetzt wird.

5. Verfahren nach einem der Ansprüche 1 bis 4, **dadurch gekennzeichnet, daß** ein Basispolyol vom Molekulargewicht 1.800 bis 4.500, vorzugsweise vom Molekulargewicht 2.000 bis 4.000, eingesetzt wird.

6. Verfahren nach einem der Ansprüche 1 bis 5, **dadurch gekennzeichnet, daß** ein zweibis sechs-funktionelles Polyol mit ethylenisch ungesättigten Endgruppen vom Molekulargewicht 3.000 bis 15.000, vorzugsweise vom Molekulargewicht 4.500 bis 12.000, eingesetzt wird.

7. Verfahren nach einem der Ansprüche 1 bis 6, **dadurch gekennzeichnet, daß** das Polyol mit ethylenisch ungesättigten Endgruppen in einer Menge von 2-20 Gew.-%, vorzugsweise 3 bis 10 Gew.-% bezogen auf die Gesamtmenge an Basispolyol, eingesetzt wird.

8. Verfahren nach einem der Ansprüche 1 bis 7, **dadurch gekennzeichnet, daß** als Enolether (Cyclohex-3-enylidenmethoxymethyl)-benzol in einer Menge von 0,1 bis 5 Gewichtsprozent bezogen auf die eingesetzte Monomermenge, eingesetzt wird.

9. Stabile, agglomeratfreie, niedrigviskose Pfropfcopolymer-Dispersion, erhältlich nach dem Verfahren gemäß einem der Ansprüche 1 bis 8.

10. Verwendung der gemäß einem der Ansprüche 1 bis 8 erhältlichen Pfropfcopolymerisate als Polyolkomponente bei der Herstellung von Polyurethanschaumstoffen.

## Claims

1. A process for producing stable, low-viscosity graft copolymer dispersions which are free from agglomerates by the radical polymerisation of ethylenically unsaturated monomers in a polyalkylene oxide which contains 2 to 6 hydroxyl groups and which has an OH number greater than 20 as a base polyol, **characterised in that** the polymerisation is effected in the presence of a polyol containing ethylenically unsaturated terminal groups and an enol ether of the following general formula
A=CH-O-R
where
A is a divalent radical of formula 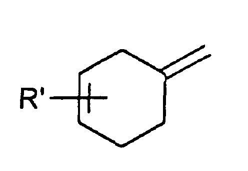
R represents a C₁₋₁₈ alkyl, C₅₋₁₀ cycloalkyl or optionally a benzyl radical with a substituted nucleus,
and
R¹ represents hydrogen or a C₁₋₈ alkyl radical,
optionally in the presence of an organic solvent, wherein
the amount of ethylenically unsaturated monomers is 25 - 65 % by weight with respect to the total amount of final product.

2. A process according to claim 1, **characterised in that** styrene and acrylonitrile in a weight ratio of 80:20 to 100:0 are used as the ethylenically unsaturated monomers.

3. A process according to claim 1, **characterised in that** styrene and acrylonitrile in a weight ratio of 50:50 to 80:20 are used as the ethylenically unsaturated monomers.

4. A process according to any one of claims 1 to 3, **characterised in that** a polyalkylene oxide containing two to six hydroxyl groups and with an OH number of 20 to 100, preferably 30 to 70, is used as the base polyol.

5. A process according to any one of claims 1 to 4, **characterised in that** a base polyol is used which has a molecular weight of 1800 to 4500, preferably a molecular weight of 2000 to 4000.

6. A process according to any one of claims 1 to 5, **characterised in that** a polyol is used which has a functionality of two to six, which contains ethylenically unsaturated terminal groups and which has molecular weight of 3000 to 15,000, preferably a molecular weight of 4500 to 12,000.

7. A process according to any one of claims 1 to 6, **characterised in that** the polyol containing ethylenically unsaturated terminal groups is used in an amount of 2-20 % by weight, preferably 3 to 10 % by weight, with respect to the total amount of base polyol.

8. A process according to any one of claims 1 to 7, **characterised in that** (cyclohex-3-enylidenemethoxymethyl)-benzene is used as the enol ether, in an amount of 0.1 to 5 % by weight with respect to the amount of monomer used.

9. A stable, low-viscosity graft copolymer dispersion which is free from agglomerates, obtainable by the process according to any one of claims 1 to 8.

10. Use of the graft copolymers obtainable according to any one of claims 1 to 8 as polyol components in the production of polyurethane foamed materials.

## Revendications

1. Procédé pour la préparation de dispersions stables, exemptes d'agglomérats, peu visqueuses, de copolymères greffés par polymérisation radicalaires de monomères à insaturation éthylénique dans un oxyde de polyalkylène contenant 2 à 6 groupes hydroxy, d'indice d'OH supérieur à 20 en tant que polyol de base, **caractérisé en ce que** la polymérisation est réalisée en présence d'un polyol à groupes terminaux à insaturation éthylénique, d'un éther d'énol de formule générale
A=CH-O-R,
dans laquelle
A représente un radical divalent de formule 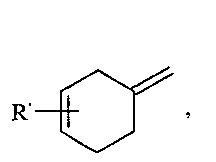
R représente un groupe alkyle en C₁-C₁₈, cycloalkyle en C₅-C₁₀ ou le cas échéant un radical benzyle substitué dans le noyau,
et
R' représente l'hydrogène ou un groupe alkyle en C₁-C₈,
et le cas échéant en présence d'un solvant organique,
la quantité des monomères à insaturation éthylénique représentant de 25 à 65 % du poids total du produit fini.

2. Procédé selon la revendication 1, **caractérisé en ce que** l'on utilise en tant que monomères à insaturation éthylénique le styrène et l'acrylonitrile dans des proportions relatives en poids de 20:80 à 100:0.

3. Procédé selon la revendication 1, **caractérisé en ce que** l'on utilise en tant que monomères à insaturation éthylénique le styrène et l'acrylonitrile dans des proportions relatives en poids de 50:50 à 80:20.

4. Procédé selon l'une des revendications 1 à 3, **caractérisé en ce que** l'on utilise en tant que polyol de base un oxyde de polyalkylène contenant 2 à 6 groupes hydroxy, d'indice d'OH 20 à 100, de préférence 30 à 70.

5. Procédé selon l'une des revendications 1 à 4, **caractérisé en ce que** l'on utilise un polyol de base de poids moléculaire 1 800 à 4 500, de préférence de 2 000 à 4 000.

6. Procédé selon l'une des revendications 1 à 5, **caractérisé en ce que** l'on utilise un polyol de fonctionnalités 2 à 6, à groupes terminaux à insaturation éthylénique, de poids moléculaire 3 000 à 15 000, de préférence 4 500 à 12 000.

7. Procédé selon l'une des revendications 1 à 6, **caractérisé en ce que** l'on utilise le polyol à groupes terminaux à insaturation éthylénique en quantité de 2 à 20 %, de préférence de 3 à 10 % du poids total du polyol de base.

8. Procédé selon l'une des revendications 1 à 7, **caractérisé en ce que** l'on utilise en tant qu'éther d'énol le (cyclohex-3-énylidèneméthoxyméthyl)-benzène en quantité de 0,1 à 5 % du poids total des monomères mis en oeuvre.

9. Dispersion stable, exempte d'agglomérats, à basse viscosité, de copolymère greffé obtenue par le procédé selon l'une des revendications 1 à 8.

10. Utilisation des copolymères greffés obtenus selon l'une des revendications 1 à 8, en tant que composants polyols à la préparation de mousses de polyuréthane.
